# EUROPEAN PATENT APPLICATION

(11) **EP 4 596 296 A1**
(43) Date of publication of application: **06.08.2025**
(21) Application number: 24155322.1
(22) Date of filing: 01.02.2024
(51) Int. Cl.: B60L 3/12, B60L 53/62, B60L 53/64, B60L 53/65, B60L 53/66

(54) **METHOD OF OPERATING AN ELECTRIC VEHICLE SUPPLY EQUIPMENT**

(71) Applicant: ABB E-mobility B.V., 2629 JG Delft (NL)
(72) Inventor: BECH, Lars, 3119 JA Schiedam (NL); BILDERBEEK, Rolf, 3543 GN Utrecht (NL)
(74) Representative: Zimmermann & Partner Patentanwälte mbB

(57) **Abstract**

A method of operating an electric vehicle supply equipment, EVSE, the method comprising receiving EVSE field data collected during a plurality of field charging processes of respective field vehicles by a field EVSE, the EVSE field data including, for each of the field charging processes, respective current and voltage data representing time-dependent current and voltage applied for charging the field vehicle during the respective field charging process; identifying a vehicle type of the field vehicle based on the EVSE field data; configuring a vehicle charging profile for the identified vehicle type using the EVSE field data, the vehicle charging profile describing a charging behavior of the identified vehicle type, whereby parameters of a charge curve for the identified vehicle type are adjusted using the EVSE field data; operating the EVSE using the vehicle charging profile.

## Description

### TECHNICAL FIELD

Embodiments of the present disclosure relate to a method of operating an electric vehicle supply equipment (EVSE). Further embodiments relate to an EVSE and to an EVSE testing device.

### BACKGROUND

Parameters for charging processes of electric vehicles (EV) by EVSE are different for different EV types, EVSE types, ambient conditions and other external factors. Under each set of conditions, a different charging profile describes the behavior of the EV and the interaction with the EV during a charging process best. Operating the EVSE with a charging profile associated with a present set of conditions improves the performance of the charging process.

### DISCLOSURE OF THE INVENTION

In the view of the foregoing, the present disclosure is directed to a method of operating an EVSE, an EVSE and an EVSE testing equipment.

According to an aspect of the present disclosure, a method of operating an electric vehicle supply equipment, EVSE, is provided. The method comprises receiving EVSE field data collected during a plurality of field charging processes of respective field vehicles by a field EVSE, the EVSE field data including, for each of the field charging processes, respective current and voltage data representing time-dependent current and voltage applied for charging the field vehicle during the respective field charging process; identifying a vehicle type of the field vehicle based on the EVSE field data; configuring a vehicle charging profile for the identified vehicle type using the EVSE field data, the vehicle charging profile describing a charging behavior of the identified vehicle type, whereby parameters of a charge curve for the identified vehicle type are adjusted using the EVSE field data; and operating the EVSE using the vehicle charging profile.

According to another aspect of the present disclosure, an EVSE, configured to be operated by the method of any of the embodiments described herein, is described. The EVSE comprises a vehicle interface configured for connecting the EVSE to a vehicle to be charged, the EVSE being configured for identifying a vehicle type of the vehicle to be charged; a data storage configured to store the vehicle charging profile describing the charging behavior of the vehicle type of the vehicle to be charged; and electric equipment configured for charging the vehicle to be charged according to the vehicle charging profile.

According to another aspect of the present disclosure, an EVSE testing device, configured to interact with an EVSE (100) according to the method of any of the embodiments described herein, is provided. The EVSE testing device comprises an EVSE interface configured for connecting the EVSE testing device to an EVSE to be tested; an interface for selecting a test vehicle charging profile describing the charging behavior of a vehicle type to be tested; and electric equipment configured to replicate the electric behavior of the vehicle type to be tested, using the selected test vehicle charging profile.

According to some embodiments, the electric vehicle may be a land vehicle, a seaborne vehicle or an airborne vehicle. Land vehicles may comprise road vehicles, such as cars, motorcycles, buses or trucks; or rail vehicles, such as locomotives, electric multiple units or trams. Seaborne vehicles may comprise vehicles for use on inland waters or seagoing vehicles. Airborne vehicles may comprise fixed-wing aircraft or rotary wing aircraft, exemplarily planes, helicopters, drones or air taxis, in particular eVTOL.

According to some embodiments, the EVSE field data may comprise information on a vehicle type, on a vehicle configuration, in particular a vehicle battery type and a configuration of the electric equipment of the EV or power system architecture of the EV, on an EVSE type, in particular an EVSE software version, or on an ambient condition. In some embodiments, the ambient condition may comprise a weather condition, exemplarily a temperature, in particular an ambient temperature, a temperature of the EVSE, or a temperature of the EV; or a rainfall or a snowfall condition. In some embodiments, the EVSE field data may comprise an electric grid condition, exemplarily an electricity price, a greenness indicator, particularly indicating the share of renewable or non-fossil electricity available, or an electric grid use price. In some embodiments, the EVSE field data may comprise predictions employed during the field charging process, in particular predictions on the electricity price. In some embodiments, the electric grid condition may comprise a wave form of the electric current of the electric grid. In some embodiments, the electric grid condition may comprise the mains frequency of the electric grid. In some embodiments, the electric grid condition may comprise information on grid noise, in particular on grid noise sources. In some embodiments, the electric grid condition may comprise the impedance of the electric grid.

In some embodiments, the EVSE field data comprise a communication protocol between the EVSE and the EV during the field charging process. In particular, the EVSE field data comprise communication data to initiate the charging process, to terminate the charging process and to communicate settings of the charging process. In some embodiments, the communication data may comprise data sent from the EV to the EVSE that describe electrical properties of the EV, exemplarily the charge level of the battery of the EV. In some embodiments, the communication data comprises a timing of data sent from the EVSE to the EV and vice versa. In some embodiments, the communication data comprises an order of data sent from the EVSE to the EV and/or vice versa. In some embodiments, the communication data comprises the content of data sent.

In some embodiments, a field charging processes may be a charging process conducted in a normal use case, in particular with a user aiming to charge the EV. In particular, the user may not be interested and/or actively involved in obtaining field data. Exemplarily, the user may be a consumer or a business consumer loading his/her EV at the EVSE to increase the charge level of the EV. In some embodiments, the identity of the user may not be part of the EVSE field data. In some embodiments, the plurality of field charging processes may comprise charging processes conducted by a plurality of users, in particular by consumers and/or business consumers. In some embodiments, the plurality of field charging processes may comprise charging processes deliberately initiated under well-defined conditions, in particular to collect data on the charging behavior. In some embodiments, the plurality of field charging processes may be conducted with a plurality of EVSE, in particular with EVSE located at a plurality of locations, exemplarily with different climate and/or weather conditions. In some embodiments, the plurality of field charging processes may be conducted with a plurality of EVSE operators. The plurality of EVSE may be EVSE of a single type or EVSE of different types, exemplarily EVSE with a different software or software version, or EVSE of a different EVSE series. In some embodiments the EVSE field data may be stored in a cloud storage.

In some embodiments, the EVSE field data comprise an impedance of the battery of the field vehicle. The impedance of the battery may also be described as the internal resistance of the battery. In some embodiments, the impedance of the battery may describe a state of battery. In particular, the impedance of the battery of the field vehicle may be determined by the EVSE or may be communicated by the EV to the EVSE. The impedance of the battery may comprise a common mode impedance. In some embodiments, knowledge of the impedance may allow to optimize the charge curve. In some embodiments, the EVSE field data may comprise an impedance of the EVSE. In some embodiments, the EVSE field data may comprise data of an insulation monitoring device (IMD), in particular of an IMD of the EVSE. The data of an IMD may comprise an insulation resistance or a residual current. In particular, the data of an IMD may comprise a waveform of the insulation resistance or of the residual current. The EVSE field data may comprise information on an interference between an IMD of the EV and the IMD of the EVSE. In some embodiments, the data of the IMD may be determined via a common mode measurement.

In some embodiments, the plurality of EVSE field data may be a defined data set. In some embodiments, the plurality of EVSE field data may be complemented by additional charging processes. This may advantageously allow to include recent changes in the charging processes that may occur due to different conditions of the charging process, in particular with respect to ambient conditions, or modified or new versions of the field vehicle or of the EVSE.

In some embodiments, identifying the vehicle type comprises performing a cluster analysis of the EVSE field data. In particular, the cluster analysis may analyze the EVSE field data with respect to a plurality of vehicle types, the ambient condition, in particular the weather condition, the EVSE type, a software version of the field vehicle or of the EVSE, an electric grid condition or a combination of any of the preceding parameters. In some embodiments, the cluster analysis is conducted in an EVSE. This advantageously reduces the data traffic between the EVSE and a centralized computer network and may provide a stand-alone analysis if an analysis in the centralized computer network is not feasible, exemplarily for data protection reasons. In some embodiments, the cluster analysis is conducted in a centralized computer network, exemplarily in a cloud computing system. This may advantageously allow to perform the cluster analysis on data obtained from a plurality of EVSE. In some embodiments, the cluster analysis may be conducted based on a present charging process.

In some embodiments, configuring the vehicle charging profile comprises applying a machine learning (ML) algorithm to the EVSE field data to obtain parameters of the charge curve. In particular, the ML algorithm analyzes the EVSE field data, exemplarily based on the cluster analysis. In some embodiments, the ML algorithm determines model parameters, particularly based on the EVSE field data. In some embodiments, determining model parameters comprises creating a model and creating a first set of model parameters. In some embodiments, determining model parameters comprises modifying a present model and modifying a set of present model parameters. Exemplarily, for a new software version of the EVSE or the EV, determining model parameters may comprise creating a new model based on a model of a preceding software version, in particular by modifying the model of a preceding software version. In some embodiments, the ML algorithm updates model parameters, particularly based on the EVSE field data. In some embodiments, the model parameters form a model of the identified vehicle type, in particular under specific conditions. In some embodiments, the model parameters may describe the battery of the EV, in particular the impedance of the battery. In some embodiments, the vehicle charging profile may comprise a plurality of charge curves. In some embodiments, the vehicle charging profile may be specific for at least one of the vehicle type, the EVSE type, an EV condition, exemplarily the charge level, and/or the ambient condition. Exemplarily, the vehicle charging profile may be specific for a specific vehicle type with a specific starting charge level of the battery, that is charged at a specific EVSE under specific ambient conditions, exemplarily a specific temperature. The ML algorithm employs the EVSE field data to adjust parameters of the charge curve for the identified vehicle type, exemplarily under consideration of the EVSE type and the ambient conditions, by determining common properties of field charging processes under similar conditions. This may advantageously allow to use the field charging processes, in particular when obtaining the field data from a fleet of EVSE, in which a large variety of vehicle types, EVSE types, conditions of the EV and/or ambient conditions are present in various combinations to adjust parameters of the charge curve. In some embodiments, the charge curve describes the electric charging behavior of the EV. In particular, the charge curve may describe a charging power over the charge time. In some embodiments, the charge curve may describe a charge current and a charge voltage over the charge time. In some embodiments, the charge curve may comprise limits for the charge voltage or the charge voltage. In some embodiments, the charge curve may comprise a wave form of the charge curve, in particular a wave form of the current over time or a wave form of the voltage over time. In some embodiments, the charge curve may comprise information on charge current noise and/or charge voltage noise, in particular on noise sources of the charge current and/or the charge voltage.

In some embodiments, adjusting parameters of the charge curve may comprise adjusting parameters of a field charge curve. In some embodiments, adjusting parameters of the charge curve may comprise adjusting parameters of a model curve, exemplarily of a theoretical or generic charge curve. In some embodiments, adjusting parameters of the charge curve may comprise creating a charge curve, exemplarily based on a charge curve for a different vehicle type, EVSE type, EV condition or ambient condition. In some embodiments, adjusting the parameters of the charge curve may comprise updating the parameters of the charge curve. In particular, updating the parameters may comprise optimizing the parameters of the charge curve.

According to some embodiments, operating the EVSE comprises analyzing present charging data of the EVSE of a present charging process, the present charging data being indicative of a present vehicle type. In some embodiments, present charging data may comprise data, in particular communication data, that are generated upon initiating the present charging process. Exemplarily, the present charging data may comprise a vehicle identification that identifies a vehicle type, a present load condition or a present electric grid condition. In some embodiments, present load condition is the load condition of the present vehicle. The present load condition may comprise a present charge level, a charge level desired, exemplarily indicating loading up to an 80% charge level or a charge time desired, exemplarily until a scheduled departure of the present vehicle. The present electric grid condition may comprise a present electricity price, a present greenness indicator, particularly indicating the share of renewable or non-fossil electricity available at the moment, or a present electric grid use price. In some embodiments, the present electric grid condition may comprise information on a future electric grid condition, in particular a prediction on the future electric grid condition, exemplarily an electricity price for electricity consumed at a future price such as a 15-min intraday electricity price. In some embodiments, the present charging data may comprise a present charge curve, particularly indicating current and voltage data for the present charging process. In some embodiments, particularly in cases where the EVSE is part of a charging station with multiple EVSE, the present charging data may comprise information on the maximum electrical power available. In some embodiments, the vehicle type or the vehicle configuration of the present vehicle may be determined from the present charging data.

In some embodiments, the present charging data is analyzed within the EVSE. In some embodiments, the present charging data of the EVSE is transmitted into the centralized computer network to be analyzed. In some embodiments, the present charging data may be pre-analyzed in the EVSE and may be further analyzed in the centralized computer network.

In some embodiments, operating the EVSE further comprises accessing a memory to receive a vehicle charging profile that at least substantially represents the vehicle type of the present vehicle. In some embodiments, the memory may be part of the EVSE. In some embodiments, the memory may be part of the centralized computer network. In some embodiments, the vehicle charging profile may be considered as at least substantially representing the vehicle type of the present vehicle if vehicle components that are particularly relevant for the charging behavior, exemplarily the battery version, the power system architecture or the software version, behave similarly.

In some embodiments, the vehicle charging profile that at least substantially represents the vehicle type of the present vehicle may represent the type of the EVSE, a present ambient condition, in particular a present weather condition, or the present load condition. In some embodiments, the vehicle charging profile may represent the present load condition or the present electric grid condition. Accessing a vehicle charging profile that best represents the present charging process may advantageously allow to operate the EVSE using an optimized vehicle charging profile that provides an improved performance for the present charging process under consideration of the vehicle type of the present vehicle, the present ambient condition, the present load condition, the present load condition and the present electric grid condition.

In some embodiments, operating the EVSE using the vehicle charging profile received for charging a present vehicle may comprise communicating with the present vehicle along a communication pattern described by the vehicle charging profile. In some embodiments, operating the EVSE using the vehicle charging profile received for charging a present vehicle may comprise setting the current provided by the EVSE as described by the vehicle charging profile. In some embodiments, the vehicle charging profile may provide instructions for operating the EVSE in case of faults. In some embodiments, operating the EVSE using the vehicle charging profile received for charging a present vehicle may comprise interacting with other EVSE, in particular with other EVSE in a charging station, or interacting with a centralized controller.

In some embodiments, analyzing present charging data of the EVSE of a present charging process comprises analyzing information on a present load condition. Analyzing information on a present load condition may comprise obtaining information on a present load condition, in particular information provided by the present vehicle, exemplarily the present charge level, a charge level desired or a charge time desired. In some embodiments, obtaining information on a present load condition may comprise obtaining information from a user, in particular from a user of the present vehicle, exemplarily via an interface or a data connection.

In some embodiments, the vehicle charging profile received at least substantially represents the present load condition to manage the present charging process. The vehicle charging profile received may be considered as to at least substantially represent the present load condition, if the charging process under consideration of the present load condition and the charging process described by the vehicle charging process are substantially similar, in particular with respect to the charge curve. This may advantageously allow to charge the present vehicle optimized to the specific present load condition based on field charging processes with a similar load condition.

In some embodiments, analyzing present charging data of the EVSE of a present charging process comprises analyzing information on a present electric grid condition. Analyzing information on a present electric grid condition may comprise obtaining information on a present electric grid condition, in particular information provided by an external entity, exemplarily an electricity provider, or a data provider. In some embodiments, the EVSE may obtain information on a present electric grid condition from a controller of a charging station or from other EVSE, in particular from other EVSE that are part of the charging station. In some embodiments, the EVSE may obtain information on an electric power available, exemplarily from an electric grid operator or the electricity provider. In some embodiments, in particular for the EVSE being part of the charging station, the EVSE may obtain information on a present electric grid condition from a load management system. The load management system may, in particular for the charging station, distribute a total electric power available to individual EVSE. In some embodiments, analyzing information on a present electric grid condition may comprise analyzing present predictions on future electric grid conditions, in particular on future electric grid conditions that may be within the charge time of the present charging process. This may advantageously allow to manage the present charging process in response to the future electric grid conditions, exemplarily in response to future changing electricity prices.

In some embodiments, the vehicle charging profile received at least substantially represents the present electric grid condition to manage the present charging process. The vehicle charging profile received may be considered as to at least substantially represent the present electric grid condition, if the charging process under consideration of the present electric grid condition and the charging process described by the vehicle charging process are substantially similar, in particular with respect to the charge curve. This may advantageously allow to charge the present vehicle optimized to the specific present electric grid condition based on field charging processes with a similar electric grid condition. Exemplarily, the charge curve, in particular the power transmitted, of the present vehicle may be optimized in view of present electricity prices, future electricity prices and/or the charge time desired.

In some embodiments, operating the EVSE comprises interacting with an EVSE testing device according to the vehicle charging profile. The EVSE testing device may be an EV simulator, configured to simulate an electric vehicle according to the vehicle charging profile. In some embodiments, the EVSE testing device is configured to replicate properties of the field vehicle. Replicating properties may comprise replicating the communication behavior of the EV or electrical properties of the EV. In particular, the EVSE testing device may replicate the impedance of the EV. Replicating the communication behavior may comprise replicating vehicle identification signals, or control signals for the charging process. In some embodiments, the EVSE testing device may replicate effects of ambient conditions during the charging process. In particular the EVSE testing device may be configured to replicate effects due to a temperature. In some embodiments, the EVSE testing device is configured to replicate faults during the charging process. In particular, the EVSE testing vehicle may replicate EV-induced faults during the charging process, exemplarily faults due to communication or faults due to electric components of the EV. In some embodiments, the vehicle charging profile may describe a faulty charging behavior. This may be particularly advantageous to test and optimize operating modes of the EVSE in response to faults occurring during field charging processes. Using the EVSE simulator and operating the EVSE by interacting with an EVSE testing device according to the vehicle charging profile may be advantageous because it allows to test the EVSE under different configurations, particularly with vehicle charging profiles for a variety of vehicle types, vehicle conditions and ambient conditions, without the need of physically providing a corresponding electric vehicle.

In some embodiments, the EVSE testing device replicates the properties of the field vehicle of one of the plurality of field charging processes. Replicating the properties of one of the plurality of field charging processes may allow to investigate the charging behavior in a single field charging process. Single field charging processes may be of particular interest for faulty charging processes, exemplarily for interruptions in communication or charging. In some embodiments, operating the EVSE by interacting with an EVSE testing device may allow to investigate single field charging processes in a test environment, in particular if damage to the EVSE or the EV has been caused by the single field charging process.

In some embodiments, the method may be used to operate the EVSE. The EVSE may comprise a vehicle interface configured for connecting the EVSE to a vehicle to be charged. The EVSE may be configured for identifying the vehicle type of the vehicle to be charged. In some embodiments, the vehicle interface may comprise a connecting element. The connecting element may be configured to establish an electrical connection between the vehicle and the EVSE. In some embodiments, the connecting element may establish a communication connection between the EVSE and the vehicle. In some embodiments the vehicle interface may comprise a wireless data connection between the vehicle and the EVSE. In some embodiments, the EVSE may comprise a user interface to communicate with the user, exemplarily the owner or the operator (e.g. driver) of the vehicle, and to receive input commands from the user. Exemplarily, the user may provide a charge time desired or a charging mode desired, exemplarily whether the charging process is to be optimized for specific parameters such as electricity price.

In some embodiments, the EVSE comprises a data storage configured to store the vehicle charging profile describing the charging behavior of the vehicle type of the vehicle to be charged. The data storage may store a plurality of vehicle charging profiles or only the vehicle charging profile describing the charging behavior of the vehicle type of the vehicle to be charged. In some embodiments, the EVSE may be connected to a centralized computer network to receive the vehicle charging profile describing the charging behavior of the vehicle type of the vehicle to be charged. In some embodiments, the EVSE may comprise a sensor system to determine ambient conditions, in particular a weather condition. The sensor system may exemplarily comprise a thermometer, a humidity sensor and/or a rainfall sensor.

In some embodiments, the EVSE may comprise electric equipment configured for charging the vehicle to be charged according to the vehicle charging profile. The electric equipment may particularly comprise the connecting element configured to connect the EVSE with the vehicle to be charged. The EVSE may comprise an electric connection to the electric grid. In some embodiments, the EVSE may comprise a buffer battery.

In some embodiments, the method may be used to operate the EVSE by interacting with the EVSE testing device. The EVSE testing device may be configured to interact with the EVSE. The EVSE testing device may comprise an EVSE interface for connecting the EVSE testing device to an EVSE to be tested. In particular the EVSE testing device may comprise a counter connecting element configured to establish an electric connection with the connecting element of the EVSE. In some embodiments, the counter connecting element may establish a communication connection with the EVSE.

In some embodiments, the EVSE testing device may comprise an interface for selecting a test vehicle charging profile describing the charging behavior of a vehicle type to be tested. The interface may comprise a data connection with a controller. In some embodiments, the interface is configured to receive a user command defining the vehicle type to be tested. Testing the vehicle type may comprise replicating the electric and communication behavior of the tested vehicle type to test the EVSE for the tested vehicle type. The test vehicle charging profile may be stored on a data storage of the EVSE testing device. In some embodiments, the test vehicle charging profile may be received from a centralized computer network.

Embodiments of the present disclosure may advantageously allow to use a variety of field data, comprising field charging processes under various conditions and with various vehicle types, to optimize the operation of EVSE. In some embodiments, present charging processes may be optimized based on the field data. In some embodiments, the testing of EVSE using the EVSE testing device may be optimized such that EVSE may be tested based on realistic field data that comprise a large variety of different scenarios. Vehicle charging profiles may be updated based on recent field data. The method allows to continuously optimize the charging processes and the vehicle charging profiles under consideration of the field charging processes.

### BRIEF DESCRIPTION OF THE DRAWINGS

The accompanying drawings relate to embodiments of the disclosure and are described in the following:
- FIG 1: schematically illustrates a method of operating an EVSE according to embodiments described herein;
- FIG 2: schematically illustrates the method of operating an EVSE of Fig. 1 with additional details according to embodiments described herein;
- FIG 3: schematically illustrates the method of operating an EVSE of Fig. 1 with additional details according to embodiments described herein
- FIG 4: schematically illustrates the method of operating an EVSE according to embodiments described herein in an alternative representation.

### DETAILED DESCRIPTION OF EMBODIMENTS

Reference will now be made in detail to the various embodiments of the disclosure, one or more examples of which are illustrated in the figures. Generally, only the differences with respect to individual embodiments are described. Each example is provided by way of explanation of the disclosure and is not meant as a limitation of the disclosure. Further, features illustrated or described as part of one embodiment can be used on or in conjunction with other embodiments to yield a further embodiment. It is intended that the description includes such modifications and variations.

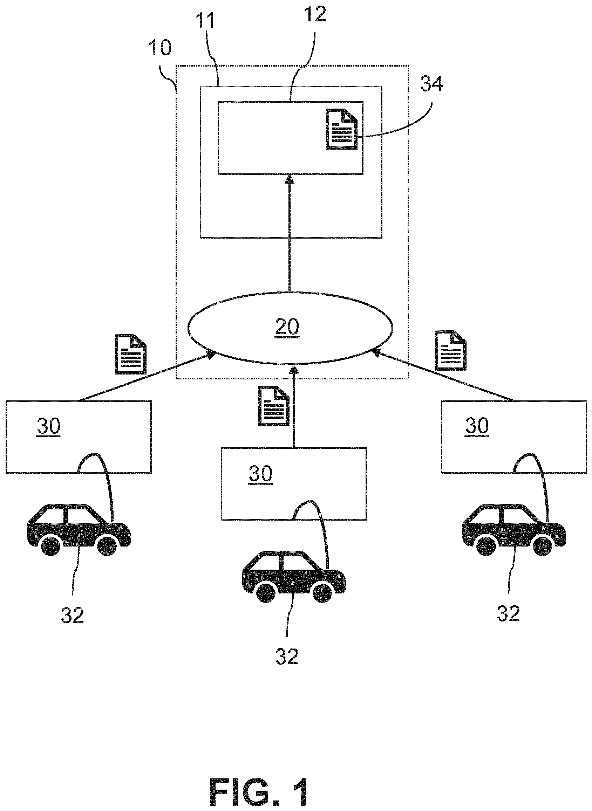

Fig. 1 schematically illustrates the method of operating the EVSE. Field vehicles (32) are charged by field EVSE (30). During the field charging process, field data is generated. The field data is transmitted to a data storage 20. The data storage 20 may be a centralized computing unit in a cloud. In some embodiments, not shown in the figures, the data storage 20 may be part of the EVSE or may be part of one of the field EVSE 30. An analysis unit 11 may receive the field data and configure a vehicle charging profile 12 that comprises parameters 34 of a charge curve. The data storage 20 and the analysis unit may be part of a computing unit 10. The computing unit 10 may be located in a centralized computing unit.

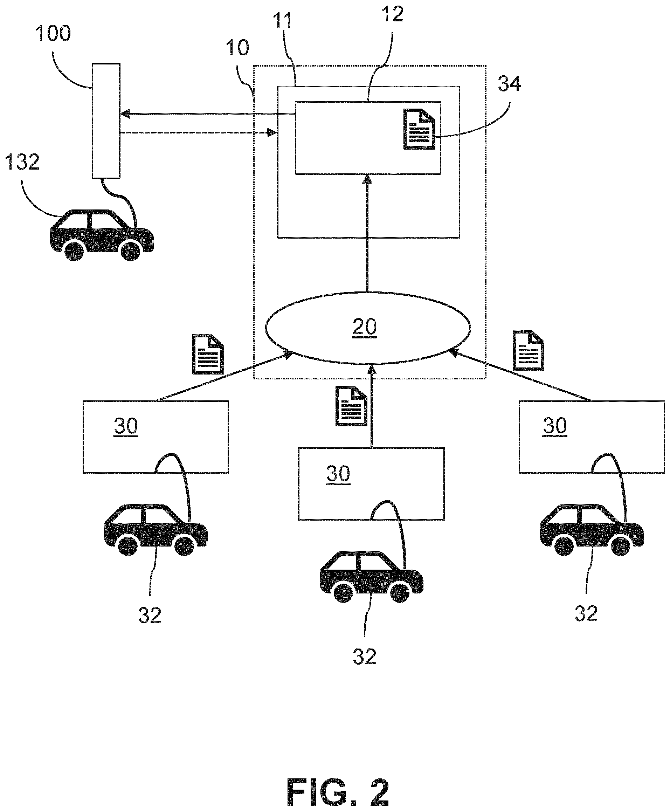

Fig 2 schematically illustrates the method of Fig. 1 in the context of operating the EVSE (100). A present vehicle 132 is connected with the EVSE 100. The EVSE 100 transmits present charging data of a present charging process of the present vehicle 132 to the analysis unit 11. In some embodiments, the EVSE transmits processed present charging data to the analysis unit 11. The analysis unit 11 identifies the vehicle type, and, in some embodiments, further properties. The analysis unit 11 accesses the data storage 20 to receive the vehicle charging profile 12, with parameters 34, that at least substantially represents the vehicle type of the present vehicle 132. The EVSE 100 is operated using the vehicle charging profile 12 received for charging a present vehicle 132.

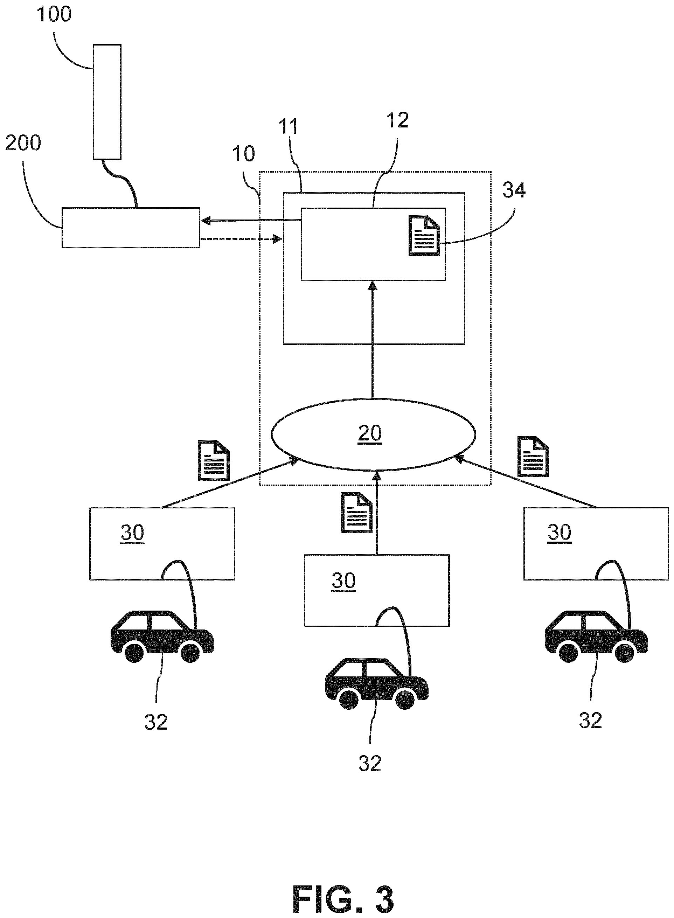

Fig 3 schematically illustrates the method of Fig. 1 in the context of operating the EVSE 100 by interacting with an EVSE testing device 200. The EVSE testing device 200 is connected with the EVSE 100. The EVSE testing device 200 requests the vehicle charging profile 12 with charging parameters 34 from the computing unit 10. The EVSE 100 is operated by interacting with the EVSE testing device 200 according to the vehicle charging profile 12.

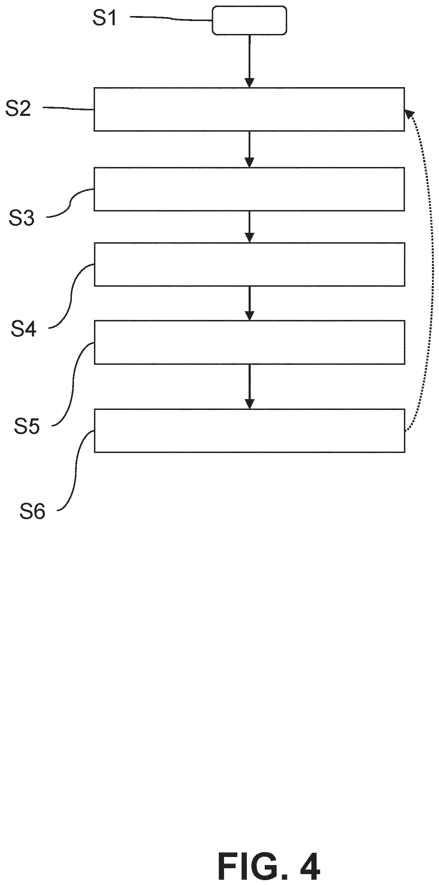

Fig 4 schematically illustrates an embodiment of the method of operating an EVSE. In particular, Fig 4 illustrates configuring the vehicle charging profile. Upon initiation S1 of the method, EVSE field data is received S2. The EVSE field data is collected during a plurality of field charging processes. In some embodiments, the EVSE field data is collected in a data storage and received from the data storage. In some embodiments, the EVSE field data is received from field EVSE. The EVSE field data is categorized S3 by a cluster analysis. In particular, the EVSE field data is categorized S3 according to the vehicle type. A machine learning algorithm is applied S4 to the EVSE data to configure the vehicle charging profile describing a charging behavior of a specific vehicle type, particularly under specific conditions. The vehicle charging profile is transmitted S5 to the EVSE to operate S6 the EVSE. In some embodiments, data generated during operating S6 the EVSE may be received.

## Claims

1. A method of operating an electric vehicle supply equipment, EVSE (100), the method comprising:
- receiving EVSE field data collected during a plurality of field charging processes of respective field vehicles (32) by a field EVSE (30), the EVSE field data including, for each of the field charging processes, respective current and voltage data representing time-dependent current and voltage applied for charging the field vehicle (32) during the respective field charging process;
- identifying a vehicle type of the field vehicle (32) based on the EVSE field data;
- configuring a vehicle charging profile (12) for the identified vehicle type using the EVSE field data, the vehicle charging profile (12) describing a charging behavior of the identified vehicle type, whereby parameters (34) of a charge curve for the identified vehicle type are adjusted using the EVSE field data; and
- operating the EVSE (100) using the vehicle charging profile (12).

2. The method of claim 1, wherein identifying the vehicle type comprises performing a cluster analysis of the EVSE field data with respect to a plurality of vehicle types and wherein configuring the vehicle charging profile (12) comprises applying a machine learning, ML, algorithm to the EVSE field data to obtain the parameters (34) of the charge curve.

3. The method of any of the preceding claims, wherein the EVSE field data comprise a communication protocol between the EVSE (100) and the field vehicle (132) during the field charging process.

4. The method of any of the preceding claims, wherein the EVSE field data comprise an impedance of a battery of the field vehicle.

5. The method of any of the preceding claims, wherein the EVSE field data comprise an ambient condition, in particular a weather condition, during the field charging process.

6. The method of any of the preceding claims, wherein the EVSE field data comprise a load condition and/or an electric grid condition.

7. The method of any of the preceding claims, wherein configuring the vehicle charging profile (12) comprises updating the parameters (34) of the charge curve.

8. The method of any of the preceding claims, wherein the EVSE field data are received from a plurality of field EVSE (30).

9. The method of any of the preceding claims, wherein operating the EVSE (100) using the vehicle charging profile (12) comprises:
- analysing present charging data of the EVSE (100) of a present charging process, the present charging data being indicative of a present vehicle (132) type;
- accessing a data storage (20) to receive a vehicle charging profile (12) that at least substantially represents the vehicle type of the present vehicle (132); and
- operating the EVSE (100) using the vehicle charging profile (12) received for charging a present vehicle (132).

10. The method of any of the preceding claims,
wherein analysing present charging data of the EVSE of a present charging process comprises analysing information on a present load condition and/or a present electric grid condition; and
wherein the vehicle charging profile received at least substantially represents the present load condition and/or the present electric grid condition to manage the present charging process, in particular with respect to the present load condition and/or the present electric grid condition.

11. The method of any of claims 1-8, wherein operating the EVSE comprises interacting with an EVSE testing device (200) according to the vehicle charging profile; and wherein the EVSE testing device (200) is configured to replicate properties of the field vehicle.

12. The method of claim 11, wherein the EVSE testing device replicates the properties of the field vehicle of one of the plurality of field charging processes.

13. The method of any of claims 11-12, wherein operating the EVSE according to the vehicle charging profile comprises a communication with the EVSE testing device according to the vehicle charging profile.

14. An EVSE (100), configured to be operated by the method of any of claims 1-10, comprising
- a vehicle interface configured for connecting the EVSE to a vehicle to be charged, the EVSE being configured for identifying a vehicle type of the vehicle to be charged;
- a data storage configured to store the vehicle charging profile describing the charging behavior of the vehicle type of the vehicle to be charged; and
- electric equipment configured for charging the vehicle to be charged according to the vehicle charging profile.

15. An EVSE testing device (200), configured to interact with an EVSE (100) according to the method of any of claims 1-8 or 11-13, comprising
- an EVSE interface configured for connecting the EVSE testing device to an EVSE to be tested;
- an interface for selecting a test vehicle charging profile describing the charging behavior of a vehicle type to be tested; and
- electric equipment configured to replicate an electric behavior of the vehicle type to be tested, using the selected test vehicle charging profile.
